Europäisches Patentamt

European Patent Office

Office européen des brevets

(11) Numéro de publication: **0 409 694 A1**

# DEMANDE DE BREVET EUROPEEN

(21) Numéro de dépôt: 90401986.6

(22) Date de dépôt: **10.07.90**

(51) Int. Cl.⁵: **C08J 9/20**, C08F 12/02, //(C08J9/20,C08L25:02)

(30) Priorité: **19.07.89 FR 8909704**

(43) Date de publication de la demande:
**23.01.91 Bulletin 91/04**

(84) Etats contractants désignés:
**AT BE CH DE DK ES FR GB GR IT LI LU NL SE**

(71) Demandeur: **NORSOLOR S.A.**
**Tour Aurore - Cédex 5 18, place des Reflets**
**F-92080 Paris la Défense 2(FR)**

(72) Inventeur: **Godfrin, Hugues**
**16, rue Claude de Bussy**
**F-62580 Vimy(FR)**

(74) Mandataire: **Rieux, Michel**
**NORSOLOR Service Propriété Industrielle**
**Tour Aurore 18, Place des Reflets Cedex no.**
**5**
**F-92080 Paris la Défense 2(FR)**

(54) **Procédé de préparation de perles de polymère expansibles et matériaux en dérivant.**

(57) La polymérisation en suspension aqueuse d'au moins un monomère vinylaromatique est réalisée en présence, par rapport au monomère vinylaromatique, de 0,01% à 0,6% environ en poids d'au moins une cire de polyéthylène et de 0,005% à 0,1% environ en poids d'au moins un agent tensio-actif non-ionique ayant une valeur HLB comprise entre 7 et 16.

Matériaux obtenus à partir des perles expansibles préparées selon ce procédé de polymérisation.

## PROCEDE DE PREPARATION DE PERLES DE POLYMERE EXPANSIBLES ET MATERIAUX EN DERIVANT.

La présente invention concerne un procédé de préparation de perles de polymère expansibles et les matériaux obtenus à partir desdites perles.

Les panneaux de polystyrène expansé, obtenus par moulage à chaud de perles de polystyrène expansibles ou préexpansées, sont connus pour leur faible coefficient de conductibilité thermique et sont, de ce fait, très utilisés en isolation thermique. D'autres pièces en polystyrène expansé sont également utilisées, de façon très répandue, dans l'industrie de l'emballage comme matériaux de calage.

De façon à augmenter la productivité des installations de moulage de polystyrène expansé, on a cherché des additifs qui permettent une plus grande cadence de moulage tout en conservant aux matériaux obtenus un faible coefficient de conductibilité thermique. Le principal obstacle que l'on rencontre quand on essaie d'augmenter la cadence est l'allongement du temps de refroidissement des pièces moulées.

On a maintenant trouvé une combinaison d'additifs qui permet de diminuer de façon très importante le temps de refroidissement des pièces moulées en polystyrène expansé tout en n'ayant pas d'influence défavorable sur leur conductibilité thermique.

La présente invention concerne un procédé de préparation de perles de polymère expansibles comprenant (a) la polymérisation en suspension aqueuse, à une température comprise entre 80°C et 150°C environ, sous une pression comprise entre 1 et 20 bars environ, pendant une durée comprise entre 6 et 20 heures environ, d'au moins un monomère vinylaromatique en présence d'une quantité efficace d'au moins un initiateur de polymérisation et d'une quantité efficace d'au moins un stabilisant de suspension, et (b) l'addition d'une quantité efficace d'au moins un agent d'expansion, caractérisé en ce qu'il consiste à réaliser la polymérisation en présence, par rapport au(x) monomère(s) vinylaromatique(s), de 0,01% à 0,6% environ en poids d'au moins une cire de polyéthylène et de 0,005% à 0,1% environ en poids d'au moins un agent tensio-actif non ionique ayant une valeur HLB (balance hydrophile - lipophile) comprise entre 7 et 16 environ.

Par monomère vinylaromatique, on entend selon l'invention, le styrène et ses homologues supérieurs tels que notamment les vinyltoluènes, l'alpha-méthylstyrène.

En tant qu'initiateur de polymérisation, on peut utiliser un peroxyde tel que le peroxyde de benzoyle, de cumyle, le peroxyde de ditertiobutyle, le 2,5-diméthyl-2,5-ditertiobutyl-peroxyhexyne-3, un perester tel que le perbenzoate de tertiobutyle, un hydroperoxyde tel que l'hydroperoxyde de tertiobutyle, ou un dérivé diazoïque, tel que le 2,2'-azo-bis-isobutyronitrile. L'initiateur est utilisé de préférence en quantité au plus égale à 1% en poids par rapport au monomère vinylaromatique.

Le stabilisant de suspension agit comme colloïde protecteur pour empêcher l'agglomération des particules de polymère formé. Il peut s'agir d'un polymère soluble dans l'eau tel que l'alcool polyvinylique ou d'un composé minéral insoluble dans l'eau tel qu'un phosphate tricalcique comme l'hydroxyapatite. Dans ce dernier cas, on associe au stabilisant de suspension au moins un co-stabilisant tel que par exemple un persulfate de métal alcalin en une quantité de préférence inférieure à 30 ppm par rapport au monomère vinylaromatique. La quantité de stabilisant de suspension généralement utilisée est au plus égale à 1% en poids par rapport au monomère vinylaromatique.

Le rapport pondéral de l'eau au monomère vinylaromatique dans la suspension est avantageusement compris entre 0,3 et 1,5, de préférence voisin de 1.

L'agent d'expansion ajouté au milieu réactionnel pendant ou après la polymérisation est de préférence choisi parmi les hydrocarbures saturés tels que le butane, le pentane, l'hexane, le cyclopentane, les hydrocarbures halogénés tels que le dichlorodifluorométhane, le chlorotrifluorométhane, le chlorure de méthyle. La quantité d'agent d'expansion utilisée est généralement inférieure à 10% en poids par rapport au monomère vinylaromatique.

Par cire de polyéthylène selon l'invention, on entend un polymère ou copolymère d'éthylène possédant au moins l'une des trois propriétés suivantes :
- masse moléculaire moyenne en nombre, mesurée par chromatographie par perméation de gel, comprise entre 500 et 5 000 environ,
- point de ramollissement compris entre 90 et 110°C environ,
- indice de fluidité, mesuré selon la norme ASTM D 1238 condition E, supérieur à 100 dg/min, de préférence compris entre 200 et 2 000 dg/min environ.

Par copolymère de l'éthylène, on entend le produit résultant de la copolymérisation de l'éthylène avec soit au moins une alpha-oléfine comportant de 3 à 12 atomes de carbone, soit au moins un monomère éthyléniquement insaturé portant au moins un groupe fonctionnel tel que l'acide acrylique, l'acide méthacrylique, les (méth)acrylates d'alkyle dont le radical alkyle possède de 1 à 8 atomes de carbone, l'anhydride maléique et l'acétate de vinyle.

La quantité de cire de polyéthylène utilisée pendant la polymérisation est avantageusement comprise entre 0,05% et 0,4% en poids par rapport au monomère vinylaromatique, de préférence comprise entre 0,1 et 0,3% en poids.

Par agent tensio-actif non-ionique, on entend selon la présente invention un composé choisi parmi les dérivés polyoxyéthylénés des (alkyl)phénols, les dérivés polyoxyéthylénés des alcools possédant au moins 12 atomes de carbone, les dérivés polyoxyéthylénés des acides organiques ayant au moins 12 atomes de carbone, les esters d'un acide organique ayant au moins 12 atomes de carbone et du polyoxyéthylène sorbitol.

On utilise avantageusement un dérivé polyoxyéthyléné d'un alkylphénol, de préférence d'un dialkylphénol, dont le radical alkyle comprend de 4 à 12 atomes de carbone, de préférence 8 ou 9. Avantageusement, le nombre de chaînons d'oxyde d'éthylène par molécule est compris entre 5 et 50.

La quantité d'agent tensio-actif non ionique utilisée pensant la polymérisation est avantageusement comprise entre 0,01% et 0,05% en poids par rapport au monomère vinylaromatique, de préférence comprise entre 0,02 et 0,04% en poids.

On peut également effectuer la polymérisation en présence d'au moins un agent de transfert de chaîne, tel qu'un mercaptan ou le dimère de l'alpha-méthylstyrène, si l'on souhaite limiter la masse moléculaire du polymère expansible formé, ou bien en présence d'au moins un composé éthyléniquement insaturé jouant le rôle de réticulant tel que le divinylbenzène ou le triallylcyanurate.

Dans le but d'obtenir des matériaux ignifugés, on peut également réaliser la polymérisation en présence d'au moins un agent ignifugeant choisi notamment parmi les composés bromés tels que l'hexabromocyclohexane, le pentabromomonochlorocyclohexane, l'hexabromocyclododécane, l'octa-, le nona-et le décabromodiphényle, l'octa-, le nonaet le décabromodiphényléther. On utilise une quantité d'agent ignifugeant de préférence voisine de 0,1 à 2% en poids environ par rapport au monomère vinylaromatique.

Après polymérisation, acidification du milieu réactionnel jusqu'à un pH voisin de 2 et addition de l'agent d'expansion, les perles obtenues sont lavées à l'eau, centrifugées, séchées dans un courant d'air (à une température généralement comprise entre 25°C et 55°C) puis tamisées. Leur teneur en agent d'expansion est généralement voisine de 5 à 8% en poids. Leur densité apparente est généralement voisine de 600 à 700 kg/m³.

Les perles peuvent ensuite être transformées en perles préexpansées par action par exemple de la vapeur d'eau pendant une durée suffisante pour atteindre la densité apparente prédéterminée qui peut, par exemple, être comprise entre 7 et 100 kg/m³. Les perles préexpansées peuvent être transformées en pièces moulées en les introduisant dans un moule non étanche aux gaz, que l'on porte à une température supérieure au point d'ébullition de l'agent d'expansion pendant la durée nécessaire aux perles pour épouser la forme intérieure du moule. Après refroidissement la pièce obtenue est démoulée. Le moule peut être soit complétement empli de perles préexpansées et dans ce cas, la densité de la pièce moulée obtenue sera approximativement la même que celle des perles préexpansées, soit non complétement empli et dans ce cas, la pièce moulée aura une densité inférieure.

La présente invention concerne également les matériaux obtenus à partir des perles expansibles préparées selon le procédé décrit ci-dessus, et contenant de 0,01% à 0,6% en poids environ d'au moins une cire de polyéthylène telle que définie ci-dessus et de 0,005% à 0,1% en poids environ d'au moins un agent tensio-actif non-ionique ayant une valeur HLB comprise entre 7 et 16 environ.

Ces matériaux peuvent être des perles préexpansées, des pièces moulées expansées de toutes formes géométriques et de tout volume.

Les exemples suivants ont pour but d'illustrer l'invention de manière non-limitative. Les parties, sauf indication contraire, sont exprimées en poids.

Exemple 1 (Comparatif)

Dans un réacteur muni de moyens d'agitation, chauffage et refroidissement, on introduit successivement 100 parties d'eau, 0,17 partie d'hydroxyapatite, 0,2 partie de cire de polyéthylène 6 A commercialisée par la Société ALLIED CHEMICALS, 100 parties de styrène, 0,5 partie d'huile de paraffine, 0,296 partie de peroxyde de benzoyle, 0,11 partie de dimère d'alpha-méthylstyrène, 0,15 partie de peroxyde de ditertiobutyle. 0,001 partie de persulfate de potassium au total est ajoutée au milieu réactionnel à raison de 1/5 au début de réaction et 4/5 après 5 heures à 90°C. Le mélange réactionnel est porté à 90°C pendant 3,5 heures et on ajoute 0,19 partie d'hydroxyapatite; il est encore maintenu à 90°C pendant 2,5 heures puis, après addition de 8 parties de n-pentane, il est porté à 130°C pendant une heure. Après refroidissement du milieu réactionnel, le pH de la phase aqueuse est amené à une valeur voisine de 2 par addition de HCl. Les perles expansibles obtenues sont lavées à l'eau, centrifugées, séchées dans un courant d'air et tamisées puis préexpansées jusqu'à obtenir une masse volumique de 15 g/l.

Un moule à blocs, en acier, non étanche aux gaz, est empli complétement de perles préexpansées. Après fermeture, le moule est chauffé à la vapeur d'eau, à une température voisine de 110°C pendant 20 secondes. On mesure alors le temps que met le bloc moulé pour que la pression exercée sur la paroi du moule diminue jusqu'à 1,15 bar. Par définition ce temps est appelé temps de refroidissement (TR). On observe une durée de 38 minutes.

Exemple 2 (Comparatif)

On répète en tous points le mode opératoire de l'exemple 1 excepté que l'on remplace la cire de polyéthylène par 0,03 partie de dinonylphénol éthoxylé commercialisé sous la dénomination SINNOPAL DNP 10, introduit juste avant addition de l'agent d'expansion.

Le temps de refroidissement est de 27 minutes.

Exemple 3

On associe les deux additifs, utilisés séparement aux exemples 1 et 2, dans les mêmes quantités respectivement utilisées auxdits exemples, selon le même protocole opératoire.

Le temps de refroidissement est de 15 minutes.

**Revendications**

1 - Procédé de préparation de perles de polymère expansibles comprenant (a) la polymérisation en suspension aqueuse, à une température comprise entre 80°C et 150°C, sous une pression comprise entre 1 et 20 bars, pendant une durée comprise entre 6 et 20 heures, d'au moins un monomère vinylaromatique en présence d'une quantité efficace d'au moins un initiateur de polymérisation et d'une quantité efficace d'au moins un stabilisant de suspension, et (b) l'addition d'une quantité efficace d'au moins un agent d'expansion, caractérisé en ce qu'il consiste à réaliser la polymérisation en présence, par rapport au(x) monomère(s) vinylaromatique(s), de 0,01% à 0,6% en poids d'au moins une cire de polyéthylène et de 0,005% à 0,1% en poids d'au moins un agent tensio-actif non-ionique ayant une valeur HLB (balance hydrophile - lipophile) comprise entre 7 et 16.

2 - Procédé selon la revendication 1, caractérisé en ce que la cire de polyéthylène satisfait au moins l'une des trois propriétés suivantes :

masse moléculaire moyenne en nombre, mesurée par chromatographie par perméation de gel, comprise entre 500 et 5 000,

point de ramollissement compris entre 90 et 110 °C,

indice de fluidité, mesuré selon la norme ASTM D 1238 condition E, supérieur à 100 dg/min.

3 - Procédé selon l'une des revendications 1 et 2, caractérisé en ce que l'agent tensio-actif non-ionique est choisi parmi les dérivés polyoxyéthylénés des (alkyl)phénols, les dérivés polyoxyéthylénés des alcools possédant au moins 12 atomes de carbone, les dérivés polyoxyéthylénés des acides organiques ayant au moins 12 atomes de carbone, les esters d'un acide organique ayant au moins 12 atomes de carbone et du polyoxyéthylène sorbitol.

4 - Procédé selon la revendication 3 , caractérisé en ce que le dérivé polyoxyéthyléné d'un alkylphénol est le dinonylphénol polyoxyéthyléné.

5 - Procédé selon l'une des revendications 1 à 4, caractérisé en ce qu'on réalise la polymérisation en présence d'au moins un agent iguifugeant en une quantité comprise entre 0,1 et 2% en poids par rapport au monomère vinylaromatique.

6 - Matériaux obtenus à partir des perles expansibles préparées selon le procédé de l'une des revendications 1 à 5 et contenant de 0,01% à 0,6% en poids d'au moins une cire de polyéthylène et de 0,005% à 0,1% en poids d'au moins un agent tensio-actif non-ionique ayant une valeur HLB comprise entre 7 et 16.

7 - Matériaux selon la revendication 6, caractérisés en ce qu'ils consistent en perles preexpansées.

8 - Matériaux selon la revendication 6, caractérisés en ce qu'ils consistent en pièces moulées.

Office européen
des brevets

**RAPPORT DE RECHERCHE EUROPEENNE**

Numero de la demande

EP  90 40 1986

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-3 347 279 (HOECHST AG) <br> * Revendications 1-5; page 8, exemple 1 * <br> --- | 1-3,5-8 | C 08 J 9/20 <br> C 08 F 12/02 // <br> (C 08 J 9/20 <br> C 08 L 25:02 ) |
| Y | CHEMICAL ABSTRACTS, vol. 82, no. 12, résumé no. 73863m, Columbus, Ohio, US, & DATABASE WPI (DERWENT), no. 74-89370V; & JP-A-49 066 785 (ELECTRO CHEM. IND) <br> * Chemical Abstracts and Derwent Abstracts * <br> --- | 1-3,5-8 | |
| A | US-A-4 761 432 (SONNENBERG et al.) <br> * Revendications 1-4; colonnes 5,6; exemple 1 * <br> --- | 1-8 | |
| A | GB-A-2 110 217 (USS ENGINEERS & APPLICANTS) <br> * Revendications 1-7; pages 1-2, exemples 1,2,4-8 * <br> ----- | 1-8 | |

| | DOMAINES TECHNIQUES RECHERCHES (Int. Cl.5) |
|---|---|
| | C 08 J <br> C 08 F |

Le présent rapport a été établi pour toutes les revendications

| Lieu de la recherche | Date d'achèvement de la recherche | Examinateur |
|---|---|---|
| LA HAYE | 09-10-1990 | OUDOT R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)